# EUROPÄISCHE PATENTANMELDUNG

(11) **EP 3 305 455 A1**
(43) Veröffentlichungstag der Anmeldung: **11.04.2018**
(21) Anmeldenummer: 17184574.6
(22) Anmeldetag: 02.08.2017
(51) Int. Cl.: B23K 13/01, B23K 28/02, B23K 20/12, F01L 1/047

(54) **HERSTELLUNGSVERFAHREN EINER NOCKENWELLE**

(30) Priorität: 07.09.2016 DE 102016217024
(71) Anmelder: Mahle International GmbH, 70376 Stuttgart (DE)
(72) Erfinder: GEYER, Andreas, 73240 Wendlingen (DE); MOHLER, Mario, 70563 Stuttgart (DE); WINKLER, Peter, 70191 Stuttgart (DE)
(74) Vertreter: BRP Renaud & Partner mbB Rechtsanwälte Patentanwälte Steuerberater

(57) **Zusammenfassung**

Die Erfindung betrifft ein Herstellungsverfahren einer Nockenwelle (111) mit zumindest zwei metallischen Bauteilen (10,11). Erfindungswesentlich ist dabei, dass die beiden Bauteile (10,11) mittels eines kombinierten Induktions-/Reibschweißverfahren miteinander verschweißt werden.

Hierdurch sollen die Vorteile beider Schweißverfahren genutzt werden können.

## Beschreibung

Die vorliegende Erfindung betrifft ein Herstellungsverfahren einer Nockenwelle gemäß dem Oberbegriff des Anspruchs 1. Die Erfindung betrifft außerdem eine nach diesem Verfahren hergestellte Nockenwelle.

Beim Schweißen von Antriebselementen auf Nockenwellenrohre wird üblicherweise ein Reibschweißverfahren eingesetzt, welches jedoch zu unerwünschten Schweißwülsten führen kann, die eine Nachbearbeitung erforderlich machen. Reibschweißverfahren gibt es in mehreren Variationen, jedoch beruhen alle auf dem gleichen Prinzip, nämlich dass Gleitreibung genutzt wird, um kinetische Energie (gewöhnlicher Weise Rotationsbewegung) in Hitze umzuwandeln. Zu keiner Zeit während des Verfahrens wird irgendeines der Metalle geschmolzen, weshalb dieser Vorgang in die als Festkörperschweißen bekannte Kategorie fällt. Da keine Verflüssigung auftritt, sind diese Schweißvorgänge beständig gegen Schmelzschweißungsdefekte, wie Porosität, Schlacke-Einschlüsse, unvollständiges Verschmelzen, unzureichende Durchdringung, Einbrandkerben, etc.

Aus der DE 699 20 770 T2 ist ein Festkörperschweißverfahren für Rohrleitungen bekannt, welches die jeweiligen Vorteile des Induktionsschweißens und Reibschweißens kombiniert.

Aus der US 7,005,620 B2 ist beispielsweise ein Verschweißen zweier Kolbenteile bekannt.

Die vorliegende Erfindung beschäftigt sich mit dem Problem, für ein Herstellungsverfahren einer Nockenwelle der gattungsgemäßen Art eine verbesserte oder zumindest eine alternative Ausführungsform anzugeben, welche insbesondere die aus dem Stand der Technik bekannten Nachteile überwindet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, erstmals bei einem Herstellungsverfahren einer Nockenwelle mit zumindest zwei metallischen Bauteilen, ein kombiniertes Induktions-/Reibschweißverfahren einzusetzen, um die metallischen Bauteile der Nockenwelle miteinander zu verbinden. Hierdurch lassen sich insbesondere die beim Reibschweißen üblicherweise auftretenden Schweißwülste vermeiden, wodurch auch der daraus resultierende Nachbearbeitungsaufwand zumindest reduziert werden kann. Zudem bietet das erfindungsgemäße kombinierte Induktions-/Reibschweißverfahren den großen Vorteil, dass im Vergleich zum Laserschweißen die Werkstoffauswahl nicht so stark begrenzt ist.

Bei einer vorteilhaften Weiterbildung der Erfindung werden als Bauteile ein Nockenwellenrohr und ein längsendseitig dazu angeordnetes Antriebselement verwendet. Hierdurch ermöglicht das erfindungsgemäße Verfahren erstmals eine schnelle, kostengünstige und zugleich qualitativ hochwertige Fertigung von Nockenwellen.

Bei einer vorteilhaften Weiterbildung der Erfindung umfasst das kombinierte Induktions-/Reibschweißverfahren die in der DE 699 20 770 T2 beschriebenen Schritte:
- Erwärmen von gegenüberliegenden, insbesondere parallelen, Oberflächen der Bauteile mittels einer Induktionsheizung, insbesondere mittels einer Hochfrequenzinduktionsheizung, auf eine erste Temperatur, die allgemein über dem Rekristallisationspunkt der Bauteile in einer nicht-oxidierenden Atmosphäre liegt, indem die Induktionsheizung zwischen den gegenüberliegenden Oberflächen oder außen angeordnet wird,
- kontinuierliches Bewegen zumindest eines Bauteils relativ zu dem anderen Bauteil parallel zu den gegenüberliegenden ebenen und parallelen Oberflächen,
- Zusammenbringen der gegenüberliegenden Oberflächen der miteinander zu verbindenden Bauteile mit einer axialen Kraft, während wenigstens eines der Bauteile weiter bewegt wird, um die gegen überliegenden Oberflächen der Bauteile zusammenzuschweißen, wobei wenigstens etwa 90 % der Schweißenergie von der Induktionsheizung beigetragen wird und die Ausgleichsschweißenergie von herkömmlichem Reibschweißen beigetragen wird, und wobei ein Gesamtlängenverlust der Bauteile infolge Abquetschens geringer als 1,0 axiale Millimeter pro Millimeter der Wanddicke der Bauteile ist.

Alternativ ist auch vorstellbar, die Induktionsheizung außen anzulegen, so dass diese die sich gegenüberliegenden und miteinander zu verschweißenden Oberflächen umgreift bzw. ringförmig umgibt.

Das erfindungsgemäße Verfahren umfasst somit ein schnelles Aufheizen der sich gegenüberliegenden Oberflächen der Bauteile mit einer Induktionsheizung und weiter ein kontinuierliches Bewegen wenigstens eines der Bauteile relativ zu dem anderen Bauteil parallel zu den sich gegenüberliegenden planaren Oberflächen, wie z.B. durch Rotieren eines der Bauteile. Schließlich umfasst das in der DE 699 20 770 T2 beschriebene und nun erstmals für die Herstellung von Nockenwellen angewandte Verfahren ein schnelles Zusammenbringen der gegenüberliegenden Bauteiloberflächen mit einer axialen Kraft, welche deutlich niedriger ist, als die Stauchkraft beim herkömmlichen Reibschweißen, während das eine Bauteil relativ zu dem anderen Bauteil weiterhin bewegt wird, um die sich gegenüberliegenden Oberflächen der Bauteile festkörperzuverschweißen.

Bei einer vorteilhaften Weiterbildung des erfindungsgemäßen Verfahrens umfasst dieses ein Heizen der gegenüberliegenden Oberflächen der zu schweißenden Bauteile auf die Heiß-Arbeitstemperatur mit einem Induktionsheizer in weniger als 30 Sekunden, um das Heizen des Bauteiles auf die ersten 1,5 mm oder weniger der sich gegenüberliegenden Oberflächen der zu verschweißenden Bauteile zu begrenzen. Die Frequenz des Induktionsheizens ist vorzugsweise 3 kHz oder mehr und weiter bevorzugt etwa 25 kHz oder mehr.

In dem bevorzugten Festkörperschweißverfahren dieser Erfindung können die Bauteile in etwa einer Sekunde zusammengeschweißt werden, dem Heizen folgend, wobei die axiale Kraft für zusätzliche etwa fünf Sekunden aufrechterhalten wird. Daher ist das Festkörperschweißen dieser Erfindung schneller und bei weitem effizienter als Reibschweißen oder Induktionsheizen und produziert wiederholbare Schweißverbindungen mit hoher Integrität bei sehr geringen Drehgeschwindigkeiten.

Bei einer weiteren bevorzugten Ausführungsform der Erfindung werden die Heiz- und Schweiß-Schritte in einer nicht-oxidierenden Atmosphäre durch Fluten der Bauteile mit einem nicht-oxidierenden Gas, wie z.B. Stickstoff ausgeführt, was die resultierende Schweißverbindung in bedeutsamer Weise verbessert.

Wie oben dargelegt ist, produziert das verbesserte Festkörperschweißverfahren gemäß der Erfindung eine verbesserte Schweißverbindung mit bedeutender Verringerung eines Verlust-Schmiedegrats. Wo röhrenartige Bauteile durch herkömmliches Reibschweißen zusammen verschweißt werden, kann der große innere Schmiedegrat, welcher durch herkömmliches Reibschweißen produziert wird, auch die Strömung von Fluiden durch die Bauteile beeinträchtigen. Daher umfasst diese Erfindung ein Bauteil, wie z.B. ein Nockenwellenrohr und ein Antriebselement, mit gegenüberliegenden planaren Oberflächen, welche zusammengeschweißt werden, mit einem relativ kleinen planaren Schmiedegrat, welcher sich radial von der Kontaktebene der sich gegenüberliegenden planaren verschweißten Oberflächen erstreckt. Das Schmiedegrat-Volumen entspricht einem kombinierten Längenverlust von weniger als 1,0 axialen Millimetern pro mm an Wanddicke. Hierdurch lässt sich insbesondere eine Ölströmung innerhalb der Nockenwelle, beispielsweise zur Schmierung von Lagerstellen, strömungsoptimieren.

Das Verfahren dieser Erfindung umfasst bevorzugt auch das Umschließen des Schweißbereiches und Einführen eines Schutzgases um die Oberflächen herum. Wie oben dargelegt ist, werden die Heiz- und Schweiß-Schritte vorzugsweise in einer nicht-reaktiven Atmosphäre ausgeführt, um chemische Reaktion der erhitzten Stoßflächen mit irgendeinem der normalerweise in der Erdatmosphäre vorhandenen Gase zu vermeiden: Sauerstoff, Stickstoff, Kohlendioxid, Wasserdampf usw. z.B. verbindet sich Stahl bei erhöhten Temperaturen schnell mit Sauerstoff, wodurch Oxide erzeugt werden, welche Defekte in der Schweißverbindung erzeugen. Umgekehrt reagiert Stickstoff nur träge mit Stahl und ist daher ein sehr nützliches Schutzgas. Selbstverständlich sind auch andere Schutzgase denkbar, wie beispielsweise Argon oder Helium.

Alternativ können schädliche Gase in der Atmosphäre für alle Arten von Metallen durch Ausführen dieses Festkörperschweißverfahrens in einem Vakuum ausgeschlossen werden. Für besondere Metalle können schädliche Gase durch Vorbeschichten der gegenüberliegenden Flächen mit einer sehr dünnen Schicht einer metallurgisch kompatiblen Festbarrierensubstanz ausgeschlossen werden, welche auch nicht mit den normalen Bestandteilen der Erdatmosphäre reagieren wird.

Obwohl die logischste Wahl eines Schutzgases Argon ist, hat Experimentieren gezeigt, dass Argon Überschläge in der Nähe des Endes des Heizzyklus verursacht, was durch die Verwendung von Stickstoff vermieden werden kann. Wenn die Temperatur von Metallen erhöht wird, werden sie in ihren mechanischen Eigenschaften graduell weniger elastisch (und spröde) und mehr plastisch (und zäh, bis der Schmelzpunkt erreicht ist, bei welchem jede mechanische Festigkeit verloren gegangen ist. Auch die Formänderungsfestigkeit nimmt mit zunehmenden Temperaturen ab. Eine materialspezifische Temperatur ist gemeinhin als die Heiß-Arbeitstemperatur bezeichnet (THW), welche im Allgemeinen als eine Temperatur oberhalb des Rekristallisationspunktes oder als eine Temperatur hoch genug, um Kaltverfestigung zu vermeiden, bezeichnet ist. Es wird angenommen, dass THW für ein gegebenes Metall jede Temperatur zwischen etwa 50 % und 90 % der Schmelztemperatur ausgedrückt in absoluten Begriffen (d.h. Kelvin oder Grad Rankine) beträgt. Herkömmliches Reibschweißen benutzt mechanische Reibung, um die Temperatur zweier angrenzender Bauteile auf THW zu erhöhen, wobei die Gleitbewegung ein kontrolliertes Maß an Verbindung zwischen den zwei Bauteilen hervorrufen kann, was in einer kräftigen Schweißverbindung resultiert. Das Festkörperschweißverfahren dieser Erfindung benutzt Induktionsheizen, um die Stoßflächen der Bauteile auf die Heiß-Arbeitstemperatur zu erhöhen.

Das Verfahren dieser Erfindung kann auf Basis jeder Art von Reibschweißen einschließlich Schwungrad-, kontinuierlichem, Orbital- und oszillierendem Reibschweißen durchgeführt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,

| | |
|---|---|
| Fig. 1A | einen partiellen Längsschnitt einer nach herkömmlichem Reibschweißverfahren geschweißten Nockenwelle; |
| Fig. 1B | eine partielle Seitenquerschnittsansicht einer nach dem Festkörperschweißverfahren der Erfindung geschweißten Nockenwelle; |
| Fig. 1C | einen partiellen Längsschnitt einer zweiten Ausführung einer nach dem Festkörperschweißverfahren der Erfindung geschweißten Nockenwelle, |
| Fig. 2A | einen Längsschnitt eines Bereiches des Geräts für das Festkörperschweißverfahren, |
| Fig. 2B | eine Schnittdarstellung entlang der Schnittebene B-B, |
| Fig. 3 | eine mit dem erfindungsgemäßen Verfahren geschweißte Nockenwelle. |

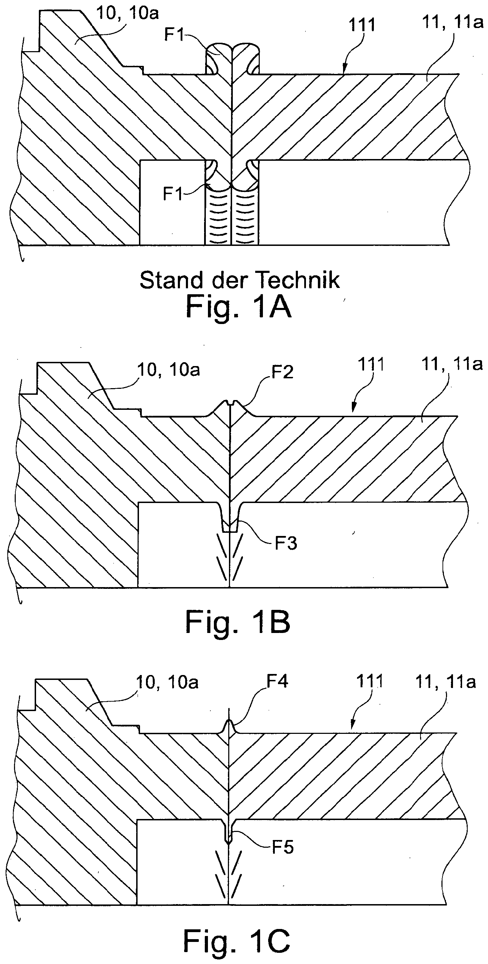

Fig. 1A illustriert eine geschweißte Nockenwelle 111, welche nach herkömmlichen Reibschweißtechniken hergestellt ist, wie z.B. herkömmlichem Schwungradreibschweißen. Die Nockenwelle 111 weist dabei ein Bauteil 11, beispielsweise ein Nockenwellenrohr, und ein Bauteil 10, beispielsweise ein Antriebselement, auf, die durch Rotieren eines der Bauteile 10, 11 relativ zu dem anderen Bauteil 11, 10 bei gleichzeitigem Gegeneinanderdrücken durch Reibschweißen miteinander verschweißt sind. Beim Reibschweißen erhitzen die sich gegenüberliegenden Oberflächen auf die Heiß-Arbeitstemperatur. Das größte Problem derartiger Reibschweißverbindungen bildet dabei das Überschuss-Schweißgratmaterial sowohl auf den Innen- als auch Außenseiten der Schweißverbindung, welche die Erscheinungsform eines doppelten Torus hat.

Insbesondere bei Nockenwellen 111 muss dieses Schweißgrat-Detail F1 entfernt werden, was mit zusätzlichem Aufwand verbunden, bzw. nachteilig hinsichtlich Kerbwirkung, Schmutzfalle bzw. erhöhter Korrosionsgefahr (Innenseite) ist. Weiterhin resultiert, wie oben dargelegt ist, das große Schweißgratvolumen in Verschlechterung der Schweißverbindungstärke aufgrund von Konzentration nichtmetallischer Einschlüsse vom Längenverlust in der Schweißschnittstelle. Das erfindungsgemäße Festkörperschweißverfahren reduziert daher nicht nur den Materialverlust und die Länge während des Schweißzyklus, sondern verbessert auch die strukturelle Integrität.

Fig. 1B und 1C stellen die charakteristischen Profile von nach dem erfindungsgemäßen Verfahren hergestellten Schweißverbindungen dar.

In Fig. 1C ist die Induktionsspule 9 angemessen dimensioniert, woraus ein vollständig verbundener äußerer Schweißgrat F4 resultiert. Auch die Gesamtmenge an Schweißgratmaterial, F4 und F5 kann reduziert werden. In beiden in Fig. 1B und 1C dargestellten Ausführungsformen wurde das Schweißgratvolumen und der Längenverlust signifikant reduziert und die Integrität der geschweißten Verbindung wurde verbessert.

Das erfindungsgemäße, kombinierte Induktions-/Reibschweißverfahren umfasst dabei folgende Schritte:
- Erwärmen von gegenüberliegenden, insbesondere parallelen, Oberflächen der Bauteile 10,11 mittels einer Induktionsheizung 40 auf eine erste Temperatur, die über dem Rekristallisationspunkt der Bauteile 10,11 in einer nicht-oxidierenden Atmosphäre liegt, indem die Induktionsheizung 40 insbesondere zwischen den gegenüberliegenden Oberflächen angeordnet wird,
- kontinuierliches Bewegen zumindest eines Bauteils 10,11 relativ zu dem anderen Bauteil 11,10 parallel zu den gegenüberliegenden Oberflächen,
- Zusammenbringen der gegenüberliegenden Oberflächen der miteinander zu verbindenden Bauteile 10,11 mit einer axialen Kraft, während wenigstens eines der Bauteile 10,11 weiter bewegt wird, um die gegen überliegenden Oberflächen der Bauteile 10,11 zusammenzuschweißen, wobei ein Teil, vorzugsweise wenigstens etwa 90 %, der Schweißenergie von der Induktionsheizung 40 beigetragen wird und die Ausgleichsschweißenergie von herkömmlichem Reibschweißen beigetragen wird, und wobei ein Gesamtlängenverlust der Bauteile 10,11 geringer als 1,0 axiale Millimeter pro Millimeter der Wanddicke der Bauteile 10,11 ist.

Von besonderem Vorteil des erfindungsgemäßen Herstellungsverfahrens ist, dass lediglich ein Bruchteil der axialen Länge verbraucht wird, wodurch ein viel kleineres Volumen an Schweißverbindungsgrat erzeugt wird. Im Gegensatz zu dem vorherigen Reibschweißverfahren startet das erfindungsgemäße Schweißverfahren tatsächlich bevor die zwei zusammenpassenden Bauteile in Kontakt treten. Die Induktionsheizphase, welche den Großteil der erforderlichen Schweißenergie bereitstellt, läuft zusammen mit der Beschleunigung des rotierenden Bauteils 10, 11 und ist ein paar Zehntelsekunden, bevor Kontakt der zwei Bauteile 10, 11 auftritt, vollendet. Dies ist notwendig, um Zeit zum Zurückziehen der Induktionsspule 9 zwischen den Bauteilen 10, 11 zu gewähren und nachfolgendes Schließen der axialen Lücke zu dem Kontakt.

Im Beispiel des Zusammenfügens zweier Bauteile 10, 11, welche mit sauberen, glatten, grade geschnittenen parallelen Enden ausgebildet sind, kann die Induktionsspule 9 zwischen den sich gegenüberstehenden Längsenden der zwei Bauteile 10 und 11 angeordnet werden, was eine kleine Lücke 12 und 13 auf jeder Seite lässt. Normalerweise ist die Induktionsspule 9 eine einfach gewickelte Spule, welche aus hohlem rechteckigem Kupferrohr gebildet ist, um Kühlwasser während des Induktions-Heizzyklus hindurch zirkulieren zu lassen.

Alternativ ist auch vorstellbar, die Induktionsheizung 40 außen anzulegen, so dass diese die sich gegenüberliegenden und miteinander zu verschweißenden Oberflächen umgreift bzw. ringförmig umgibt. Die Induktionsspule 9 bildet dabei einen die Nockenwelle 111 umgebenden Ring.

Die Induktionsspule 9 ist mit einer Hochfrequenz-Energieversorgung entweder durch flexible Energieversorgungskabel oder alternativ durch Dreh- oder Gleit-Verbindungen verbunden. Die Größe der Lücke 12 und 13 ist normalerweise auf den möglichen Minimalwert vor dem Beginn des physischen Kontaktes und/oder vordem Überschlag zwischen der Induktionsspule 9 und eines der Bauteile 10 und 11 eingestellt, entweder während der Heizphase oder während des Rückzugs. Falls die zwei Bauteile 10 und 11 gleichen Durchmesser, Wanddicke und Metallurgie aufweisen, dann wird die Induktionsspule 9 in gleichem Abstand zwischen den sich gegenüberliegenden Enden der Bauteile 10, 11 angeordnet. In Anwendungen, wo ein oder mehrere dieser drei Parameter zwischen den zwei Bauteilen 10, 11 der Nockenwelle 111 verschieden sind, wird das Ausgleichen der Hitzezufuhr zu den zwei Bauteilen 10, 11 durch Bewegen der Induktionsspule 9 näher an das die Extra-Hitzezufuhr erfordernde Bauteil 10 oder 11 erzielt. Das primäre Ziel der Lückeneinstellung ist es, sicherzustellen, dass beide Bauteile 10, 11 ihre jeweilige Heiß-Arbeitstemperatur zur selben Zeit erreichen. Die Lücke 12, 13 kann entweder vor dem Start der Induktionsheizphase bestimmt und eingestellt werden oder alternativ kontinuierlich während des Induktionsheizens mittels eines Nicht-Kontakttemperatursensors.

Die Lücken 12 und 13 dienen zwei Zwecken. Zunächst vermeiden sie physischen Kontakt zwischen den Induktionsspulen 9 und einem der Bauteile 10 und 11, was zu einer Kontamination der Bauteiloberfläche und einem elektrischem Kurzschluss der Induktionsspule 9 führen würde. Darüber hinaus stellen sie einen Pfad für die Strömung eines Schutzgases 14 dar, welches eine unerwünschte Oxidation der erhitzten Enden der Bauteile 10 und 11 vermeidet. Obwohl Stickstoff in vielen Anwendungen aus dem oben dargelegten Grund bevorzugt wird, kann das Schutzgas Stickstoff, Kohlenstoffdioxid, Argon oder andere nichtoxidierende Gase oder Mischungen davon sein, ausgewählt entsprechend den metallurgischen Erfordernissen und Erhältlichkeit an der Arbeitsstätte. Das Gas wird auf der Außenseite von einem flexiblen Vorhang 15 umgeben, welcher eng um den äußeren Umfang jedes Bauteils 10 und 11 anliegt, wodurch das Gas 14 gezwungen wird, radial nach innen zu strömen, und so kontinuierlich jeglichen Sauerstoff weg von den freigesetzten Bauteilenden verdrängt. Es ist außerdem vorgesehen, ein Zurückziehen der Induktionsspule 9 zuzulassen, während der flexible Vorhang 15 in Position gehalten wird.

Die Auswahl eines geeigneten Schutzgases 14 hängt primär von der Metallurgie der Bauteile 10, 11 und der Hochtemperaturionisationseigenschaften des Gases 14 ab. Für die meisten Anwendungen, welche eisenhaltige Verbindungen und Legierungen auf Nickelbasis betreffen, ist Stickstoff ausreichend. Jedoch kann für gewisse Metallurgien ein anderes Gas notwendig sein, z.B. bei Titanverbindungen. Obwohl bevorzugt wird, ein geeignetes Schutzgas 14 zu benutzen, sollte erkannt werden, dass die Bauteile 10, 11 vor schädlichen Gasen durch alternative und zusätzliche Verfahren, wie z.B. Vorbeschichten, geschützt werden können. Die sich gegenüberliegenden Oberflächen der Bauteile 10, 11 können dazu direkt mit einer schützenden Barrierensubstanz vorbeschichtet werden, wie z.B. einem Flussmittel auf Chloridbasis oder dergleichen, das vorzugsweise Wasserstoff ausschließt.

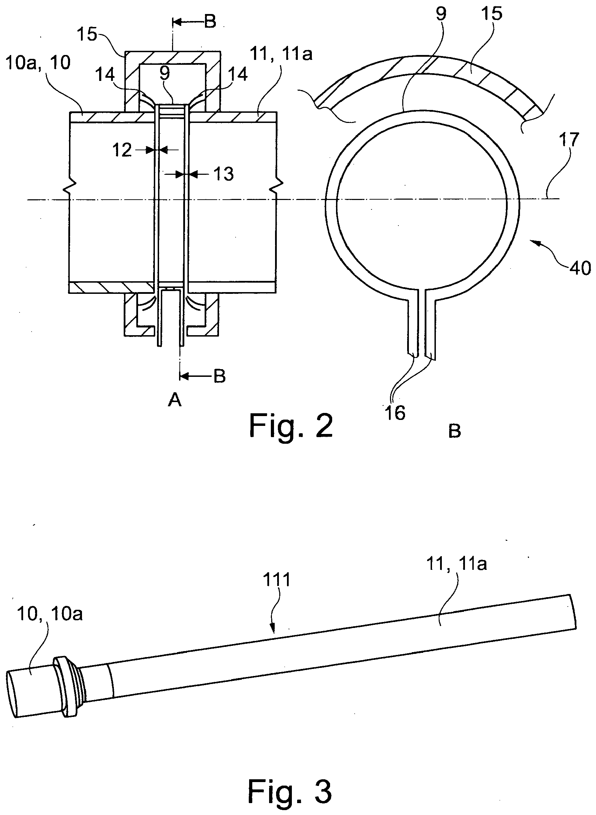

Fig. 3 zeigt nun eine nach dem erfindungsgemäßen Verfahren hergestellte Nockenwelle 111 mit einem Antriebselement und einem Nockenwellenrohr.

## Patentansprüche

1. Herstellungsverfahren einer Nockenwelle (111) mit zumindest zwei metallischen Bauteilen (10,11),
**dadurch gekennzeichnet,**
**dass** die beiden Bauteile (10,11) mittels eines kombinierten Induktions-/Reibschweißverfahren miteinander verschweißt werden.

2. Verfahren nach Anspruch 1,
**dadurch gekennzeichnet, dass**
als Bauteile (10,11) ein Nockenwellenrohr (11a) und ein längsendseitig dazu angeordnetes Antriebselement (10a) verwendet werden.

3. Verfahren nach Anspruch 1 oder 2,
**dadurch gekennzeichnet, dass**
das kombinierte Induktions-/Reibschweißverfahren folgende Schritte umfasst,
- Erwärmen von gegenüberliegenden, insbesondere parallelen, Oberflächen der Bauteile (10,11) mittels einer Induktionsheizung (40) auf eine erste Temperatur, die über dem Rekristallisationspunkt der Bauteile (10,11) in einer nicht-oxidierenden Atmosphäre liegt, indem die Induktionsheizung (40) insbesondere zwischen den gegenüberliegenden Oberflächen angeordnet wird,
- kontinuierliches Bewegen zumindest eines Bauteils (10,11) relativ zu dem anderen Bauteil (11,10) parallel zu den gegenüberliegenden Oberflächen,
- Zusammenbringen der gegenüberliegenden Oberflächen der miteinander zu verbindenden Bauteile (10,11) mit einer axialen Kraft, während wenigstens eines der Bauteile (10,11) weiter bewegt wird, um die gegen überliegenden Oberflächen der Bauteile (10,11) zusammenzuschweißen, wobei wenigstens etwa 90 % der Schweißenergie von der Induktionsheizung (40) beigetragen wird und die Ausgleichsschweißenergie von herkömmlichem Reibschweißen beigetragen wird, und wobei ein Gesamtlängenverlust der Bauteile (10,11) geringer als 1,0 axiale Millimeter pro Millimeter der Wanddicke der Bauteile (10,11) ist.

4. Verfahren nach Anspruch 3,
**dadurch gekennzeichnet, dass**
dass die gegenüberliegenden Oberflächen auf die erste Temperatur in einer Zeit von weniger als etwa 30 Sekunden erwärmt werden.

5. Verfahren nach Anspruch 1,
**dadurch gekennzeichnet, dass**
das kombinierte Induktions-/Reibschweißverfahren folgende Schritte umfasst, Zusammenschweißen der gegenüberliegenden Oberflächen der Bauteile (10,11) in etwa einer Sekunde, die auf das Erwärmen folgt, und Aufrechterhalten der Axialkraft für weitere etwa fünf Sekunden.

6. Verfahren nach Anspruch 1,
**dadurch gekennzeichnet, dass**
das Verfahren beinhaltet: Drehen wenigstens eines der Bauteile (10,11) und Zusammenschweißen der gegenüberliegenden Oberflächen der Bauteile (10,11) in weniger als etwa vier Umdrehungen, die auf das Erwärmen folgen, und Aufrechterhalten der Axialkraft, bis die Temperatur der Schweißung unter die erste Temperatur absinkt.

7. Verfahren nach Anspruch 1,
**dadurch gekennzeichnet, dass**
das Verfahren beinhaltet: Induktionserwärmen der gegenüberliegenden Oberflächen auf die erste Temperatur in einer Zeit von weniger als etwa zehn Sekunden.

8. Verfahren nach Anspruch 1,
**dadurch gekennzeichnet, dass**
das Verfahren beinhaltet: Erwärmen der gegenüberliegenden Oberflächen der Bauteile (10,11) mittels der Induktionsheizung (40) bei einer Frequenz von etwa 10 Kilohertz oder mehr.

9. Verfahren nach Anspruch 1,
**dadurch gekennzeichnet, dass**
das Verfahren ferner den Schritt umfasst: Überströmen der gegenüberliegenden Oberflächen der Bauteile (10,11) mit einem nicht-oxidierenden Gas, das in erster Linie Stickstoffgas umfasst, während die gegenüberliegenden Oberflächen mit der Induktionsheizung (40) auf die erste Temperatur erwärmt werden.

10. Verfahren nach Anspruch 1,
**dadurch gekennzeichnet, dass**
das Verfahren ferner den Schritt umfasst: Halten der gegenüberliegenden Oberflächen in einer im wesentlichen Vakuumatmosphäre.

11. Verfahren nach Anspruch 10,
**dadurch gekennzeichnet, dass**
das Verfahren ferner beinhaltet: Erwärmen der gegenüberliegenden Oberflächen in einem Vakuum mittels der Induktionsheizung (40) auf die erste Temperatur.

12. Verfahren nach Anspruch 1,
**dadurch gekennzeichnet, dass**
das Verfahren beinhaltet: Vorbeschichten der gegenüberliegenden Oberflächen mit weniger als 0,025 mm dickem metallurgisch kompatiblen Material, beispielsweise reiner Aluminiumbeschichtung, falls die Bauteile (10,11) eisenbasiert sind, während die gegenüberliegenden Oberflächen mittels der Induktionsheizung (40) auf die erste Temperatur erwärmt werden.

13. Verfahren nach Anspruch 1,
**dadurch gekennzeichnet, dass**
das Verfahren beinhaltet: Kontinuierliches Bewegen wenigstens eines der Bauteile (10,11) in einer Umlaufbewegung.

14. Nockenwelle (111) hergestellt nach dem Verfahren nach einem der vorhergehenden Ansprüche, wobei ein Bauteil (11) als Nockenwellenrohr (11a) und ein Bauteil (10) als Antriebselement (10a) ausgebildet ist.
